# EUROPÄISCHE PATENTSCHRIFT

(11) **EP 0 988 960 B1**
(45) Veröffentlichungstag und Bekanntmachung des Hinweises auf die Patenterteilung: **26.11.2003**
(21) Anmeldenummer: 99118293.2
(22) Anmeldetag: 15.09.1999
(51) Int. Cl.: B29C 73/16, C09K 3/10

(54) **Mittel und Verfahren zum provisorischen Abdichten von Fahrzeugluftreifen**
Means and process for provisional sealing of vehicle tyres
Moyen et procédé pour rendre provisoirement étanches des pneus de véhicule

(30) Priorität: 25.09.1998 DE 19844177
(43) Veröffentlichungstag der Anmeldung: 29.03.2000
(73) Patentinhaber: Continental Aktiengesellschaft, 30165 Hannover (DE)
(72) Erfinder: Hillmer, Jörg, Dr., 29336 Nienhagen (DE); Frühauf, Kai Uwe, 30851 Langenhagen (DE); Oldenettel, Holger, 30826 Garbsen (DE)

(56) Entgegenhaltungen:
- EP-A- 0 753 420
- EP-A- 0 846 552
- DE-A- 19 753 630
- US-A- 4 501 825
- DATABASE WPI Section Ch, Week 199506 Derwent Publications Ltd., London, GB; Class A81, AN 1995-041544 XP002136170 & JP 06 322347 A (KONISHI CO LTD), 22. November 1994 (1994-11-22)

## Beschreibung

Die Erfindung betrifft ein Mittel zum provisorischen Abdichten von Fahrzeugluftreifen.

Bei Fahrzeugluftreifen besteht das Problem, daß diese beim Überfahren von spitzen Gegenständen Schäden erhalten können, die zum (im günstigen Fall allmählichem) Luftdruckverlust des Reifens führen. Um solche Schäden zumindest provisorisch, d. h. für eine Zeitdauer möglichst sicher abzudichten bis der Fahrzeugluftreifen ausgetauscht werden kann, sind Abdichtmittel bekannt, die auf die Innenseite des Reifens aufgebracht werden und die die entstandenen Leckagen wie Risse oder Löcher abdichten sollen.

So ist aus Derwent World-Patent-Index 78-61496A bekannt, daß ein Abdichtmittel als klebrige Komponente ein Glycerinester von hydriertem Kolophonium enthält. Dieses Abdichtmittel basiert auf dem herkömmlichen Prinzip der Verdunstung des Lösungsmittels nach dessen Besprühen auf die innere Oberfläche des defekten Reifens. Nach dem Verdunsten des Lösungsmittels befindet sich ein fester Film auf der Reifeninnenseite. Die Verwendung von solchen Systemen hat aber den Nachteil, daß es in fester Form vorliegend nicht mehr in der Lage ist bei unzureichend abgedichteten bzw. neu auftretenden Leckagen seine Dichtwirkung zu entfalten.

Weiterhin ist in der DE 195 45 935 A1 ein Abdichtmittel auf der Basis von Naturkautschuklatex und einem kompatiblen Klebstoffharzes beschrieben. Als Klebstoffharz wird ein Terpen-Phenol-Harz verwendet. Es hat sich aber herausgestellt, daß die dort genannten Zusammensetzungen keine ausreichende Dichtwirkung besitzen und gleichzeitig Probleme bei deren Lagerfähigkeit und Verwendung insbesondere bei tiefen Temperaturen auftreten.

Die Aufgabe der vorliegenden Erfindung besteht darin ein Mittel zum provisorischen Abdichten eines Fahrzeugluftreifens zur Verfügung zu stellen, das eine verbesserte Abdichtwirkung und gleichzeitig eine verbesserte Kältelagerfähigkeit und Kälteverwendbarkeit im Vergleich zu herkömmlichen Mittel aufweist.

Gelöst wird diese Aufgabe erfindungsgemäß dadurch, daß das Mittel bezogen auf 100 Teile des gesamten Gewichtes folgende Bestandteile aufweist:
a) 30 bis 70 Gewichtsteile Naturkautschuklatex,
   wobei der Naturkautschuklatex als eine 50 bis 75 gewichtsprozentige Emulsion vorliegt (d. h. der Feststoffgehalt des Naturkautschuklatex' beträgt 50 bis 75 Gewichtsprozent),
b) 5 bis 50 Gewichtsteile zumindest eines Harzes, wobei dieses ausgewählt ist aus zumindest einem Alkin-Phenol-Harz oder zumindest einem Ester des Kolophoniums oder Gemische hiervon,
   wobei das Harz als eine 45 bis 60 gewichtsprozentige Emulsion vorliegt,
c) 10 bis 50 Gewichtsteile zumindest zwei verschiedener flüssiger Diole,
d) 1 bis 5 Gewichtsteile Alterungsschutzmittel,
   wobei das Alterungsschutzmittel als eine 30 bis 50 gewichtsprozentige Emulsion vorliegt und
e) gegebenenfalls weitere übliche Zusatzstoffe.

Es hat sich herausgestellt, daß durch die erfindungsgemäße Kombination der angegebenen Bestandteile ein Mittel zum Abdichten von Fahrzeugluftreifen bereitgestellt wird, das bei auftretenden Reifenpannen den Luftreifen sicher abdichtet und gleichzeitig eine hohe Kältelagerfähigkeit und Verwendbarkeit in der Kälte besitzt. Die Abdichtwirkung beruht auf der gezielten Koagulation des gesamten Systems verbunden mit der hohen Klebwirkung, die durch zumindest ein Alkin-Phenol-Harz oder zumindest einem Ester des Kolophoniums oder Gemische hiervon hervorgerufen wird. Die Koagulation tritt in überraschend ausgeprägter Weise erst bei hohen Scherkräften, d. h. an dem Ort der ausströmenden Luft ein. Demzufolge wird kein gleichmäßiger fester Film auf der Innenseite des Reifens erzeugt, sondern nur an den Stellen, wo eine Leckage ist. Das restliche Dichtmittel verbleibt im Reifeninneren und ist in der Lage bei später auftretenden Schäden abdichtend zu wirken. Weiterhin bleibt es überraschender Weise, bedingt durch die erfindungsgemäße Kombination von zumindest zwei flüssigen Diolen, auch bis zu sehr tiefen Temperaturen einsatzfähig, d. h. sowohl das Abdichtmittel was sich bereits im Reifeninneren befindet als auch das was im Schadensfall z. B. aus einer Vorratsflasche eingebracht werden kann.

Als besonders bevorzugt hat sich folgende Zusammensetzung erwiesen:
a) 5 bis 65 Gewichtsteile Naturkautschuklatex,
   wobei der Naturkautschuklatex als eine 50 bis 75 gewichtsprozentige Emulsion vorliegt,
b) 15 bis 30 Gewichtsteile zumindest eines Harzes, wobei dieses ausgewählt ist aus zumindest einem Alkin-Phenol-Harz oder zumindest einem Ester des Kolophoniums oder Gemische hiervon,
   wobei das Harz als eine 45 bis 60 gewichtsprozentige Emulsion vorliegt,
c) 9 bis 30 Gewichtsteile Ethandiol (z. B. Ethan-1,2-diol),
d) 1 bis 20 Gewichtsteile Bis-(hydroxypropyl)ether und/oder Propandiol (z. B. Propan-1,2-diol),
e) 1 bis 3 Gewichtsteile Alterungsschutzmittel,
   wobei das Alterungsschutzmittel als eine 30 bis 50 gewichtsprozentige Emulsion vorliegt und
f) gegebenenfalls weitere übliche Zusatzstoffe.

Der für die erfindungsgemäße Zusammensetzung verwendete Naturkautschuklatex, der auf herkömmliche Art und Weise gewonnen wird, besitzt einen Feststoffgehalt von 50 bis 75 Gewichtsprozent, wobei die beste Dichtwirkung bei einem Feststoffgehalt von 40 bis 60 Gewichtsprozent erzielt wurde. Der Naturkautschuklatex liegt als Emulsion z. B. in Wasser vor. Der Anteil an in Emulsion vorliegenden Naturkautschuklatex im Abdichtmittel beträgt erfindungsgemäß 30 bis 70 Gewichtsteile, wobei bei Konzentrationen, die außerhalb dieses Bereiches liegen, festgestellt wurde, daß Nachteile hinsichtlich der Dichtwirkung auftreten. Als besonders bevorzugt hat sich ein Anteil an in Emulsion vorliegenden Naturkautschuklatex von 50 bis 65 Gewichtsteilen erwiesen.

Wie bereits erwähnt, enthält das erfindungsgemäße Abdichtmittel 5 bis 50 Gewichtsteile, bevorzugt 15 bis 30 Gewichtsteile, zumindest eines Harzes wobei dieses ausgewählt ist aus zumindest einem Alkin-Phenol-Harz oder zumindest einem Ester des Kolophoniums oder Gemische hiervon, wobei das Harz als eine 45 bis 60 gewichtsprozentige Dispersion (Emulsion) z. B. in Wasser und/oder in 1,2 Diolen vorliegt. Bei geringeren (< 5 Gewichtsteile) Harz-Gehalten wurde festgestellt, daß die Klebwirkung des Abdichtmittels nachläßt. Werden zu hohe Anteile (> 30 Gewichtsteile) gewählt, treten zusätzlich Schwierigkeiten bezüglich der Koagulationsbeständigkeit auf.
Als Alkin-Phenol-Harz können Harze verwendet werden, die als Alkin z. B. Ethin und als Phenolkomponente z. B. Butylphenol oder Novolacke aus Formaldehyd und z. B. p. tert. Butylphenol (oder p-Diisobutylphenol) enthalten. Überraschender Weise wurde beim Einsatz von zumindest einem Alkin-Phenol-Harz festgestellt, daß dieses eine recht hohe Gefrierschutzmittelkonzentration erlaubt und somit die Verwendung des Abdichtmittels bei noch tieferen Temperaturen ermöglicht. Weiterhin besitzen Alkin-Phenol-Harze eine besonders hohe Klebfestigkeit, d. h. z. B. hohes Haftvermögen zu anderen Schichten.

Weiterhin besteht erfindungsgemäß die Möglichkeit, das Alkin-Phenol-Harz teilweise oder ganz durch zumindest einen Ester des Kolophoniums auszutauschen. Werden Gemische aus zumindest einem Ester des Kolophoniums und dem Alkin-Phenol-Harz verwendet, können diese im unterschiedlichen Verhältnissen eingemischt werden. Besonders bevorzugt ist allerdings, wenn entweder ein Alkin-Phenol-Harz oder ein Ester des Kolophoniums verwendet wird, da dadurch die Anzahl der im Abdichtmittel verwendetetn Komponenten verringert wird.

Das Kolophonium, das aus dem Baumharz verschiedener Nadelhölzer gewonnen werden kann, besteht im wesentlichen aus einem Gemisch aus Harzsäuren und Terpenen. Die Veresterung der entsprechenden Bestandteile des Kolophoniums erfolgt auf herkömmliche Art und Weise. So ist es denkbar, das Kolophonium z. B. mit Alkoholen bzw. Alkoholgemischen umzusetzen. Auch ist es möglich, daß aus dem Kolophonium gewisse Bestandteile wie z. B. die Abietinsäure, Dehydroabietinsäure, Tetrahydroabietinsäure, Dihydroabietinsäure, deren Isomere und/oder Mischungen hieraus gewonnen werden und diese einzeln oder gemeinsam mit Alkoholen oder Alkoholgemischen umgesetzt werden. Bevorzugt werden als Alkohole z. B. Methanol, Ethanol, Propan-1,2,3-triol und/oder Pentaerithrithol verwendet. Die Ester des Kolophoniums zeichnen sich insbesondere durch ihre permanent vorliegende Klebrigkeit aus. Auch haben sie einen positiven Einfluß auf die Kompatibilisierung mit anderen Komponenten.

Weiterhin enhält das erfindungsgemäße Abdichtmittel 10 bis 50 Gewichtsprozent zumindest zwei verschiedener flüssiger Diole (z. B. 1,2 -Diole). Diese Substanzen werden insbesondere als Gefrierschutzmittel eingesetzt und ermöglichen somit den Gebrauch des Abdichtmittels auch in der kalten Jahreszeit. Als bevorzugte Diole werden Substanzen mit einer Kohlenstoffkettenlänge bis zu 8 Atomen verwendet. Durch geeignete Kombination verschiedener Diole kann der gewünschte Gefrierschutz je nach Einsatzgebiet des Reifens eingestellt werden. Besonders bevorzugt ist, wenn das erfindungsgemäße Abdichtmittel 9 bis 30 Gewichtsprozent Ethandiol (z. B. Ethan-1,2-diol) und 1 bis 20 Gewichtsprozent Propandiol und/oder Bis-(hydroxypropyl)ether enthält. Insbesondere die Kombination von Ethandiol mit Propandiol/ Bis-(hydroxypropyl)ether hat den Vorteil, daß die Konzentration an Gefahrstoff (Ethylenglykol) im Abdichtmittel gesenkt werden konnte, aber gleichzeitig ein ausreichender Gefrierschutz erzielt wird, so daß der Einsatz in der Kälte (bis zu -30 °C) sichergestellt ist.

Als weiteren erforderlichen Bestandteil enthält das erfindungsgemäße Abdichtmittel 1 bis 5 Gewichtsprozent, bevorzugt 1 bis 3 Gewichtsprozent, Alterungsschutzmittel. So werden insbesondere verfärbende Alterungsschutzmittel wie N-Isopropyl-N'-phenylp-phenylendiamin (IPPD) oder N'-phenyl-p-phenylendiamin (6PPD). Besonders bevorzugt ist aber die Verwendung von zumindest einem styrolisierten Diphenylamin. Durch die Anwendung von styrolisiertem Diphenylamin wird die Einsatzbereitschaft des Abdichtmittels auch bei längerer Lagerung sichergestellt.

Unter den üblichen Zusatzstoffen sollen anmeldungsgemäß Substanzen in üblichen Konzentrationen verstanden werden, wie z. B. Füllstoffe (z. B. Kieselsäure, Ruß, Kreide), Dispergiermittel, Emulgiermittel, Regulatoren.

Die Herstellung des erfindungsgemäßen Abdichtmittels kann z. B. in der Art erfolgen, daß in einem Rührkessel der in Emulsion befindliche Naturkautschuklatex vorgelegt wird und die restlichen Bestandteile, die z. B. in Dispersion/Emulsion mit Wasser vorliegen, unter Rühren zugegeben werden.

Das Abdichtmittel wird im Schadensfall durch das Ventil des Fahrzeugluftreifenrades über geeignete Vorrichtungen in das Reifeninnere befördert. An dieser Stelle sei als Beispiele auch auf die Vorrichtungen in der DE 195 45 935 A1 verwiesen.

Anhand des folgenden Ausführungsbeispiels soll die Erfindung näher erläutert werden.

Die Tabelle 1 verdeutlicht den Unterschied zwischen der erfindungsgemäßen Zusammensetzung und denen aus den Stand der Technik. Die Einheit Gewichtsteile bezieht sich anmeldungsgemäß auf das gesamte Gewicht des Abdichtmittels, wobei der Naturkautschuklatex, das Harz und der Ester in Emulsion/Dispersion vorliegen.

**Tabelle 1**

| | *Referenz DE 195 45 935 A1 [Gew.teile]* | *Referenz Derwent 78- 61496A [Gew. teile]* | ***Erfindung [Gew.teile]*** | ***Erfindung [Gew.teile]*** |
|---|---|---|---|---|
| **Bestandteile** | **1** | **2** | **3** | **4** |
| Ethylen-Propylen-Dien-Copolymer | - | Ca. 85 | - | - |
| Naturkautschuklatex ^{*} | 62 | | 60 | 60 |
| Kolophoniumester^{**} | - | Ca. 14 | 20 | - |
| Alkin-Phenol-Harz ^{***} | - | - | - | 20 |
| Terpen-Phenol-Harz | 24 | - | - | - |
| Alterungsschutzmittel ^{****} | - | - | 1 | 1 |
| Ethylenglykol | 14 | - | 16 | 14 |
| Bis-(hydroxypropyl)ether | - | - | 2 | 4 |
| ZnO/S-Paste (50:50) | - | - | 1 | 1 |
| Lösungsmittel | - | 1 | - | - |

| | | | | |
|---|---|---|---|---|
| _{*} NR-Latex Low Ammonia der Fa. Kautschukgesellschaft mbH, Deutschland | | | | |
| _{**} Fa. Hercules GmbH, Deutschland | | | | |
| _{***} Koresin der Fa. BASF AG, Deutschland | | | | |
| _{****} Wingstay L der Fa. Goodyear, USA | | | | |

Die in der Tabelle 1 angegebenen Bestandteile wurden wie bereits erwähnt miteinander vermischt.

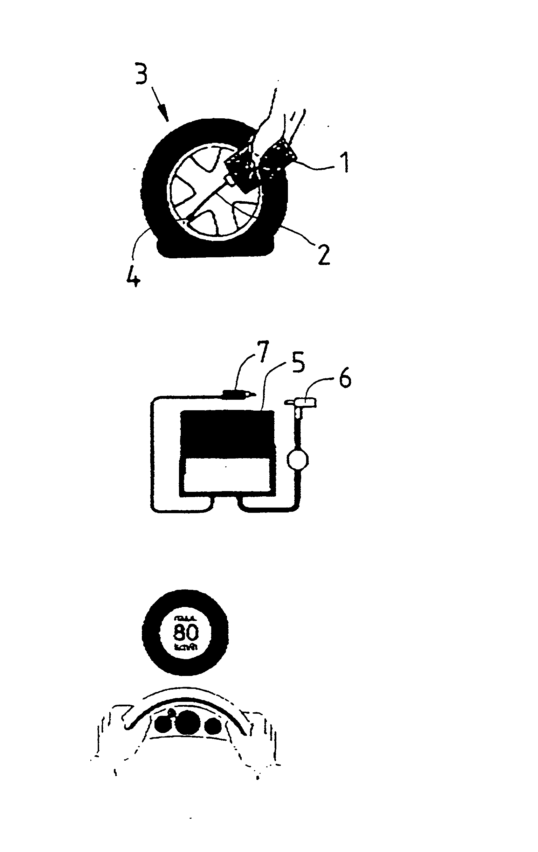

Die Figur verdeutlicht eine Vorrichtungsanordnung wie das erfindungsgemäße Abdichtmittel in den defekten Fahrzeugluftreifen eingebracht wird.

Bei Leckage des Fahrzeugluftreifens 3 wird die Dichtmittelflasche 1, in der sich das erfindungsgemäße Abdichtmittel befindet und die aus einem flexiblen Material, wie z. B. Polyethylen, besteht, geschüttelt. Über den auf der Dichtmittelflasche 1 geschraubten Einfüllschlauch 2 wird das Abdichtmittel durch das geöffnete Reifenventil 4 (nicht dargestellter Ventileinsatz ist ebenfalls herausgeschraubt) in das Innere des Fahrzeugluftreifens 3 gedrückt. Nach dem Einsetzen des Ventileinsatzes wird der Luftschlauch 6 des Kompressors 5 auf das Ventil 4 geschraubt und der Elektroanschluß 7 z. B. in die Dose des Zigarettenanzünders des Fahrzeuges gesteckt. Der Fahrzeugluftreifen wird mittels Kompressor aufgepumpt. Zur Verteilung des Abdichtmittels im Reifeninneren wird das Fahrzeug mit verringerter Geschwindigkeit bewegt und der Luftdruck erneut kontrolliert. Es ist ersichtlich, daß durch diese einfache Vorgehensweise, d. h. z. B. ohne den Reifen abzumontieren oder auch ohne die Bereitstellung einer aufwendigen druckfesten Dichtmittelflasche wie in der DE 195 45 935 A1 im Schadensfall der Fahrzeugluftreifen repariert werden kann. Aufgrund der erfindungsgemäßen Zusammensetzung des Abdichtmittels ist es auch möglich auf zusätzliche Wärmequellen zum Aufwärmen des Abdichtmittels zu verzichten, da das erfindungsgemäße Abdichtmittel bis zu ca. -25 °C einsatzfähig bleibt. Weitere Vorteile des erfindungsgemäßen Abdichtmittels sind darin zu sehen, daß die Entfernung von flüssigem Material, was z. B. beim Einfüllvorgang verschüttet worden ist, mit Wasser erfolgen kann. Ausgehärtetes Material kann nach der Demontage des Fahrzeugluftreifens als Folie abgezogen werden, sodaß keine Probleme bei der Ensorgung des erfindungsgemäßen Abdichtmittels bestehen.

Aus der Tabelle 2 geht hervor, daß die erfindungsgemäßen Abdichtmittel eine verbesserte Kältebeständigkeit sowohl bei der Lagerung als auch beim Einsatz aufweisen:

**Tabelle 2**

| | *Referenz DE 195 45 935 A1* | ***Erfindung*** | ***Erfindung*** |
|---|---|---|---|
| **Test** | **1** | **3** | **4** |
| Lagerung bei -25 °C | Geliert irreversibel - Einfüllen nicht mehr möglich | Kein Einfluß feststellbar | Kein Einfluß feststellbar |
| Einfüllvorgang möglich bis | -20 °C | -25 °C | -30 °C |

Es konnte festgestellt werden, daß nicht nur die Kältebeständigkeit sondern auch die abdichtende Wirkung des Abdichtmittels verbessert werden konnte. So konnte z. B. eine Leckage des Fahrzeugluftreifens bei einem Druckabfall von 2,5 bar auf 2,0 bar bei Verwendung des Dichtmittels der DE 195 45 935 A1 mit einer Leckagerate von bis zu ca. 800 mbar/min behoben werden. Im Gegensatz dazu wurde festgestellt, daß bei Verwendung der erfindungsgemäßen Abdichtmittel Leckageraten bis zu 1400 mbar/min abgedichtet werden können. Das bedeutet, daß somit größere Schäden sicher und dauerhaft abgedichtet werden können.

## Patentansprüche

1. Mittel zum provisorischen Abdichten von Fahrzeugluftreifen, **dadurch gekennzeichnet, daß** es bezogen auf 100 Teile des gesamten Gewichtes folgende Bestandteile aufweist:
a) 30 bis 70 Gewichtsteile Naturkautschuklatex,
wobei der Naturkautschuklatex als 50 bis 75 gewichtsprozentige Emulsion vorliegt,
b) 5 bis 50 Gewichtsteile zumindest eines Harzes, wobei dieses ausgewählt ist aus zumindest einem Alkin-Phenol-Harz oder zumindest einem Ester des Kolophoniums oder Gemische hiervon,
wobei das Harz als eine 45 bis 60 gewichtsprozentige Emulsion vorliegt,
c) 10 bis 50 Gewichtsteile zumindest zwei verschiedener flüssiger Diole,
d) 1 bis 5 Gewichtsteile Alterungsschutzmittel,
wobei das Alterungsschutzmittel als eine 30 bis 50 gewichtsprozentige Emulsion vorliegt und
e) gegebenenfalls weitere übliche Zusatzstoffe.

2. Mittel zum provisorischen Abdichten von Fahrzeugluftreifen nach Anspruch 1, **dadurch gekennzeichnet, daß** es bezogen auf 100 Teile des gesamten Gewichtes folgende Bestandteile aufweist:
a) 50 bis 65 Gewichtsteile Naturkautschuklatex,
wobei der Naturkautschuklatex als eine 50 bis 75 gewichtsprozentige Emulsion vorliegt,
b) 15 bis 30 Gewichtsteile zumindest eines Harzes, wobei dieses ausgewählt ist aus zumindest einem Alkin-Phenol-Harz oder zumindest einem Ester des Kolophoniums oder Gemische hiervon,
wobei das Harz als eine 45 bis 60 gewichtsprozentige Emulsion vorliegt,
c) 9 bis 30 Gewichtsteile Ethandiol
d) 1 bis 20 Gewichtsteile Bis-(hydroxypropyl)ether und/oder Propandiol
e) 1 bis 3 Gewichtsteile Alterungsschutzmittel,
wobei das Alterungsschutzmittel als eine 30 bis 50 gewichtsprozentige Emulsion vorliegt und
f) gegebenenfalls weitere übliche Zusatzstoffe.

3. Mittel zum provisorischen Abdichten von Fahrzeugluftreifen nach Anspruch 1 oder 2, **dadurch gekennzeichnet, daß** der Ester des Kolophoniums ein Abietinsäureester ist.

4. Mittel zum provisorischen Abdichten von Fahrzeugluftreifen nach Anspruch 3, **dadurch gekennzeichnet, daß** der Abietinsäureester gebildet ist aus Abietinsäure und einem Alkoholgemisch.

5. Mittel zum provisorischen Abdichten von Fahrzeugluftreifen nach zumindest einem der vorhergehenden Ansprüche, **dadurch gekennzeichnet, daß** das Alkin-Phenol-Harz ein Ethin-Butylphenol-Harz ist.

6. Mittel zum provisorischen Abdichten von Fahrzeugluftreifen nach zumindest einem der vorhergehenden Ansprüche, **dadurch gekennzeichnet, daß** es zumindest ein Alkin-Phenol-Harz oder zumindest einen Ester des Kolophoniums enthält.

7. Mittel zum provisorischen Abdichten von Fahrzeugluftreifen nach zumindest einem der vorhergehenden Ansprüche, **dadurch gekennzeichnet, daß** das Mittel als Alterungsschutzmittel zumindest ein styrolisiertes Diphenylamin enthält.

8. Verfahren zum provisorischen Abdichten von Fahrzeugluftreifen unter Verwendung des Mittels nach zumindest einem der vorhergehenden Ansprüche, **dadurch gekennzeichnet, daß** das in einer flexiblen Dichtmittelflasche befindliche Mittel zum provisorischen Abdichten durch das Ventil des Fahrzeugrades mit dem beschädigten Fahrzeugluftreifen gedrückt wird, anschließend der Fahrzeugluftreifen mit Luft befüllt wird und das befüllte Fahrzeugluftreifenrad in eine Drehbewegung versetzt wird.

## Claims

1. Composition for the provisional sealing of pneumatic vehicle tyres, **characterised in that**, relative to 100 parts of the total weight, it includes the following constituent ingredients:
a) 30 to 70 parts by weight natural rubber latex,
the natural rubber latex being in the form of a 50 to 75 per cent by weight emulsion,
b) 5 to 50 parts by weight of at least one resin, said resin being selected from at least one alkyne phenol resin or at least one rosin ester or mixtures thereof,
the resin being in the form of a 45 to 60 per cent by weight emulsion,
c) 10 to 50 parts by weight of at least two different liquid diols,
d) 1 to 5 parts by weight anti-oxidant,
the anti-oxidant being in the form of a 30 to 50 per cent by weight emulsion, and
e) possibly additional conventional additives.

2. Composition for the provisional sealing of pneumatic vehicle tyres according to claim 1, **characterised in that**, relative to 100 parts of the total weight, it includes the following constituent ingredients:
a) 50 to 65 parts by weight natural rubber latex,
the natural rubber latex being in the form of 50 to 75 per cent by weight emulsion,
b) 15 to 30 parts by weight of at least one resin, said resin being selected from at least one alkyne phenol resin or at least one rosin ester or mixtures thereof,
the resin being in the form of a 45 to 60 per cent by weight emulsion,
c) 9 to 30 parts by weight ethane diol,
d) 1 to 20 parts by weight bis-(hydroxypropyl)ether and/or propane diol,
e) 1 to 3 parts by weight anti-oxidant, the anti-oxidant being in the form of a 30 to 50 per cent by weight emulsion, and
f) possibly additional conventional additives.

3. Composition for the provisional sealing of pneumatic vehicle tyres according to claim 1 or 2, **characterised in that** the rosin ester is an abietic acid ester.

4. Composition for the provisional sealing of pneumatic vehicle tyres according to claim 3, **characterised in that** the abietic acid ester is formed from abietic acid and an alcohol mixture.

5. Composition for the provisional sealing of pneumatic vehicle tyres according to at least one of the preceding claims, **characterised in that** the alkyne phenol resin is an ethyne butylphenol resin.

6. Composition for the provisional sealing of pneumatic vehicle tyres according to at least one of the preceding claims, **characterised in that** it includes at least one alkyne phenol resin or at least one rosin ester.

7. Composition for the provisional sealing of pneumatic vehicle tyres according to at least one of the preceding claims, **characterised in that** the composition includes at least one styrenated diphenyl amine as the anti-oxidant.

8. Method of provisionally sealing pneumatic vehicle tyres by using the composition according to at least one of the preceding claims, **characterised in that** the composition, situated in a flexible bottle, for the provisional sealing is pressed through the valve of the vehicle wheel having the damaged pneumatic vehicle tyre, then the pneumatic vehicle tyre is filled with air, and the wheel fitted with the filled pneumatic vehicle tyre is set into a rotational movement.

## Revendications

1. Moyen permettant de rendre des pneumatiques de véhicule provisoirement étanches, **caractérisé en ce que** le moyen comprend, par rapport à 100 parties du poids total, les composants suivants :
a) entre 30 parties et 70 parties en poids de latex de caoutchouc naturel, où le latex de caoutchouc naturel est présent sous forme d'émulsion, suivant une quantité variant entre 50 pour cent et 75 pour cent en poids,
b) entre 5 parties et 50 parties en poids d'au moins une résine, où cette résine est sélectionnée parmi au moins une résine à base d'alkyne et de phénol ou parmi au moins un ester de la colophane, ou comprend des mélanges de cette résine et de cet ester, où la résine est présente sous forme d'émulsion, suivant une quantité variant entre 45 pour cent et 60 pour cent en poids,
c) entre 10 parties et 50 parties en poids d'au moins deux diols liquides différents,
d) entre 1 partie et 5 parties en poids d'un agent de protection contre le vieillissement, où le moyen de protection contre le vieillissement est présent sous forme d'émulsion, suivant une quantité variant entre 30 pour cent et 50 pour cent en poids, et,
e) le cas échéant, d'autres additifs habituels.

2. Moyen permettant de rendre des pneumatiques de véhicule provisoirement étanches selon la revendication 1, **caractérisé en ce que** le moyen comprend, par rapport à 100 parties du poids total, les composants suivants :
a) entre 50 parties et 65 parties en poids de latex de caoutchouc naturel, où le latex de caoutchouc naturel est présent sous forme d'émulsion, suivant une quantité variant entre 50 pour cent et 75 pour cent en poids,
b) entre 15 parties et 30 parties en poids d'au moins une résine, où cette résine est sélectionnée parmi au moins une résine à base d'alkyne et de phénol ou parmi au moins un ester de la colophane, ou comprend des mélanges de cette résine et de cet ester, où la résine est présente sous forme d'émulsion, suivant une quantité variant entre 45 pour cent et 60 pour cent en poids,
c) entre 9 parties et 30 parties en poids d'éthanediol,
d) entre 1 partie et 20 parties en poids d'éther de bis-hydroxypropyle el/ou de propanediol,
e) entre 1 partie et 3 parties en poids d'un agent de protection contre le vieillissement, où le moyen de protection contre le vieillissement est présent sous forme d'émulsion, suivant une quantité variant entre 30 pour cent et 50 pour cent en poids, et
f) le cas échéant, d'autres additifs habituels.

3. Moyen permettant de rendre des pneumatiques de véhicule provisoirement étanches selon la revendication 1 ou 2, **caractérisé en ce que** l'ester de la colophane est un ester d'acide abiétique.

4. Moyen permettant de rendre des pneumatiques de véhicule provisoirement étanches selon la revendication 3, **caractérisé en ce que** l'ester d'acide abiétique est constitué d'acide abiétique et d'un mélange d'alcool.

5. Moyen permettant de rendre des pneumatiques de véhicule provisoirement étanches selon au moins l'une quelconque des revendications précédentes, **caractérisé en ce que** la résine à base d'alkyne et de phénol est une résine à base d'acétylène et de butylphénol.

6. Moyen permettant de rendre des pneumatiques de véhicule provisoirement étanches selon au moins l'une quelconque des revendications précédentes, **caractérisé en ce que** le moyen contient au moins une résine à base d'alkyne et de phénol ou au moins un ester de la colophane.

7. Moyen permettant de rendre des pneumatiques de véhicule provisoirement étanches selon au moins l'une quelconque des revendications précédentes, **caractérisé en ce que** le moyen contient, comme agent de protection contre le vieillissement, au moins une diphénylamine à base de styrène.

8. Procédé permettant de rendre des pneumatiques de véhicule provisoirement étanches, en utilisant le moyen selon au moins l'une quelconque des revendications précédentes, **caractérisé en ce que** le moyen est introduit par la valve de la roue du véhicule comportant le pneumatique endommagé, en appuyant sur une bouteille flexible contenant le moyen étanche servant à assurer provisoirement l'étanchéité, le pneumatique du véhicule est ensuite rempli d'air et la roue du véhicule, avec son pneumatique rempli d'air, est entraînée dans un mouvement de rotation.
